# EUROPÄISCHE PATENTSCHRIFT

(11) **EP 1 092 476 B1**
(45) Veröffentlichungstag und Bekanntmachung des Hinweises auf die Patenterteilung: **21.05.2008**
(21) Anmeldenummer: 00122110.0
(22) Anmeldetag: 12.10.2000
(51) Int. Cl.: B02C 18/00, B02C 18/08, B29B 17/00

(54) **Schneidmühle**
Comminuting mill
Broyeur déchiqueteur

(30) Priorität: 15.10.1999 DE 19949706
(43) Veröffentlichungstag der Anmeldung: 18.04.2001
(73) Patentinhaber: Hoffmann, Ralf, 71570 Oppenweiler (DE)
(72) Erfinder: Hoffmann, Ralf, 71570 Oppenweiler (DE)
(74) Vertreter: Jeck, Anton

(56) Entgegenhaltungen:
- WO-A-97/38793
- WO-A-99/43480
- GB-A- 2 268 097

## Beschreibung

Die Erfindung betrifft eine Schneidmühle nach dem Oberbegriff des Anspruchs 1.

Derartige Schneidmühlen sind beispielsweise aus der GB 2 268 097, DE-A1-3 201 096, DE-A1-3 444 933 und DE-U1-9 200 997 bekannt. Die bekannten Schneidmühlen haben entweder eine Betriebslage, bei der die Statorachse horizontal verläuft und das Mahlgut radial zugeführt wird, oder eine Betriebslage, bei der die Statorachse vertikal verläuft und das Mahlgut axial von oben zugeführt wird. Die bekannten Schneidmühlen sind zumeist mit einer besonderen Vorschneidkammer versehen und sind von langgestreckter Bauart. Werden diese Schneidmühlen zum Zerkleinern der Angüsse von Kunststoffspritzteilen verwendet, so kommt es darauf an, ein möglichst staubfreies Granulat zu gewinnen, das für die Beschickung von Kunststoffspritzgußmaschinen wiederverwendet werden kann.

Aus der DE-U1 87 16 200 ist eine Schneidmühle für industrielles Abfallgut bekannt, bei der in einem Trichtergehäuse eine angetriebene, sich drehende, elliptische Platte zur Horizontalen geneigt angeordnet ist. Diese Platte kann an ihrem Außenrand Schneidzähne aufweisen, und der Trichter kann exzentrisch ausgebildet sein.

Ferner ist aus der DE-B1-2 315 587 eine Schneidmühle zum Feinmahlen von Gummi bekannt, bei der ein sich in einem Zylindergehäuse drehender Rotor im Schnitt eiförmig ausgebildet ist. Der Spalt zwischen Rotorspitze und Zylindergehäuse ist dabei unterschiedlich groß. Hierfür wird eine Art einstellbarer Exzenterbetrieb verwendet.

Die Aufgabe der Erfindung besteht darin, eine Schneidmühle der im Oberbegriff des Anspruchs 1 genannten Art zu schaffen, die ohne besondere Vorschneidkammer auskommt, eine kurze Bauart aufweist und die Zerkleinerung des Mahlguts zu einem staubarmen Granulat ermöglicht.

Diese Aufgabe wird mit den Merkmalen des Anspruchs 1 gelöst.

Das Rotorschneidelement kann dabei über die Statormitte eine schnelle Bewegung mit geringer Kraft ausführen, um das Mahlgut in grobe Stücke zu brechen, hier erfolgt die Grobzerkleinerung in derjenigen Kammer, in der auch die Statorschneidelemente wirken, In dieser Kammer kann ein sehr großer Bereich freibleiben, der auch sehr sperriges Mahlgut aufnehmen kann. Dadurch kann auch für großes Mahlgut eine verhältnismäßig kleine Schneidmühle gebaut werden. In dem Bereich, in dem sich das Rotorschneidelement einem Statorschneidelement nähert, steht durch die Hebelwirkung eine große Kraft zur Verfügung. In solchen Bereichen erfolgt die Hauptschneidarbeit, bei der das Mahlgut so lange geschnitten wird, bis es beispielsweise über ein Sieb staubarm der Statorkammer entnommen wird. Die Schneidelemente sind einfach gestaltet, gerade ausgebildet und können leicht ausgetauscht werden.

Dadurch ist die Grobzerkleinerung des Mahlguts noch wirksamer. Vorzugsweise beträgt die Anzahl der Statorschneidelemente acht und das Verhältnis des Statorinnenumfangs zum Rotorumfang ist derart gewählt, daß die Reihenfolge 1, 6, 3, 8, 5, 2, 7, 4 lautet. Da dadurch das Rotorschneidelement nach jedem Feinschnitt durch die Statorkammermitte geführt wird, wird die Grobzerkleinerung weiter verbessert.

Gemäß einer weiteren Ausbildung der Erfindung rollt der Rotorumfang am Statorinnenumfang ab. Dadurch ist kein gesonderter Antrieb für das Drehen des Rotors erforderlich. Vorzugsweise können der Rotor mit einer Außenverzahnung und der Stator mit einer Innenverzahnung versehen sein.

Die Anzahl der Statorschneidelemente und die Anzahl der Rotorschneidelemente können jedoch an sich beliebig gewählt werden. Eine Schneidmühle, bei der gemäß einer weiteren Ausbildung der Erfindung drei Statorschneidelemente und drei Rotoren vorgesehen sind, hat sich als besonders einfach und wirksam erwiesen. Vorzugsweise ist dabei das Verhältnis des Statorinnenumfangs zum Rotorumfang derart gewählt, daß das Rotorschneidelement jedes Rotors je Rotorumlauf mit dem nächsten Statorschneidelement zusammenwirkt.

Eine weitere Ausbildung der Erfindung bezieht sich auf eine Schneidmühle, die eine Betriebslage mit vertikaler Statorachse aufweist und bei der die Kunststoffteile axial von oben zugeführt werden. Diese Ausbildung ist so getroffen, daß der Stator eine Innenkammer aufweist, die durch eine der Anzahl der Statorschneidelemente entsprechende Anzahl von Stegen begrenzt ist, deren Schmalseiten jeweils einen bestimmten Abstand zu Schmalseiten der benachbarten Stege aufweisen, und daß jedes Statorschneidelement an einem ihm zugeordneten, rahmenförmigen Schneidelementträger befestigt ist, der zwei zu beiden Seiten des Statorschneidelements angeordnete Taschen zur Aufnahme der Stegenden zweier benachbarter Stege aufweist. Nach Abnahme der Statorinnenkammerabdeckung können daher die mit den Statorschneidelementen versehenen Schneidelementträger leicht ausgetauscht werden. Vorzugsweise sind die Schneidelementträger viereckig ausgebildet, wobei an einer Ecke das Statorschneidelement angeordnet ist und die Taschen in der Nähe des Statorschneidelements angeordnet sind.

Eine vorteilhafte, weitere Ausbildung der Erfindung sieht vor, daß oberhalb der Statorschneidelemente ein horizontaler Schneidring angeordnet ist, dessen Innenumfang im wesentlichen dem Statorinnenumfang entspricht, und daß auf dem Rotor eine Horizontalrotorschneide angeordnet ist, die mit dem Schneidring zusammenwirkt. Dadurch wird die Grobzerkleinerung weiter verbessert. Insbesondere ist dadurch das "Kappen" langer Kunststoffteile möglich. Diese zusätzliche, horizontale Schneidvorrichtung aus Schneidring und Horizontalrotorschneide schneidet das Mahlgut mit der gleichen, günstigen, vorerwähnten Hebelwirkung derart, daß es unmittelbar folgend zwischen den vertikalen Schneidelementen weiter zerkleinert werden kann. Vorzugsweise ist dabei die Horizontalrotorschneide scheibenförmig ausgebildet.

Die horizontalen Schneiden und die vertikalen Schneidelemente zeichnen sich dadurch aus, daß sie spitz aufeinander zulaufen. Dadurch wird der Bruchbereich beim Trennen verkleinert und die Fläche, die geschnitten wird vergrößert. Hierdurch wird der Staubanteil beim Zerkleinerungsvorgang gering gehalten. Vorteilhafterweise kann die Statorinnenkammer zusätzlich noch beheizt werden, um das plastische Verhalten der Kunststoffe zu verstärken und damit den Staubanteil nochmals zu vermindern und den Schneidenverschleiß zu verringern.

Gemäß einer weiteren Ausbildung der Erfindung ist ein Träger für das Rotorschneidelement vorgesehen, der wie der Träger des Statorschneidelements ausgebildet ist. Dadurch ergibt sich ein fertigungstechnischer Vorteil bei der Herstellung der Schneidelementträger.

Die Erfindung wird nun anhand von Ausführungsbeispielen näher erläutert. Es zeigen:
- Fig. 1: eine Draufsicht auf eine skizzenhaft dargestellte, erste Ausführung einer Schneidmühle gemäß der Erfindung mit abgenommener Abdeckung,
- Figuren 2A-2F: verkleinerte Draufsichten auf die Schneidmühle der Fig. 1, die verschiedene Rotorstellungen während einer Rotorumdrehung zeigen,
- Fig. 3: eine der Fig. 1 ähnliche Draufsicht, die die verschiedenen Stellungen des Rotorschneidelements nach Fig. 2 und das Zerbrechen eines Mahlgutteils zeigt,
- Fig. 4: eine vergrößerte, perspektivische Ansicht der Schneidmühle nach Fig. 3,
- Fig. 5: eine der Fig. 4 ähnliche, perspektivische Ansicht mit Darstellung einer zusätzlichen, horizontalen Schneidvorrichtung,
- Fig. 6: eine Draufsicht auf eine weitere Ausführung der zusätzlichen, horizontalen Schneidvorrichtung,
- Fig. 7: einen Schnitt längs der Linie VII-VII in Fig. 6 mit Darstellung eines Mahlguts und
- Figuren 8A-8D: Draufsichten auf eine zweite Ausführung der Schneidmühle gemäß der Erfindung mit mehreren Rotoren und mit Darstellung verschiedener Stellungen der Rotoren während einer Umdrehung der Rotoren.

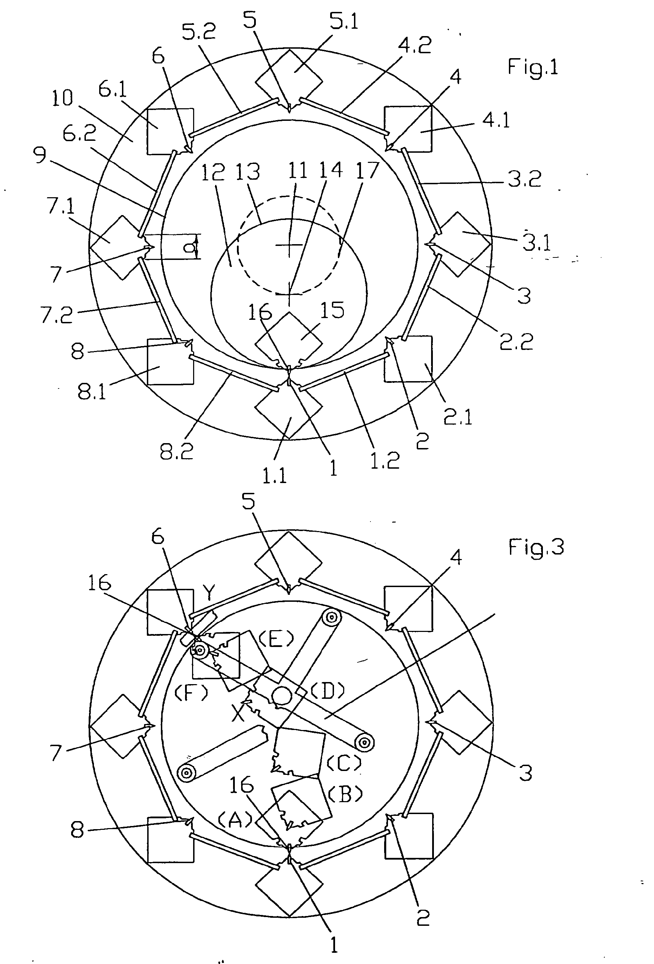

Die in Fig. 1 skizzierte Schneidmühle weist acht Statorschneidelemente 1-8 auf, die jeweils an zugehörigen Statorscheidelementträgern 1.1-8.1 leicht auswechselbar befestigt sind. Die Statorschneidelementträger 1.1-8.1 sind am Innenumfang 9 eines Stators 10 gleichmäßig verteilt angeordnet. Die in Betriebslage der Schneidmühle vertikale Achse des Stators ist mit 11 gekennzeichnet. Die Innenkammer des Stators 10 ist durch eine der Anzahl der Statorschneidelemente 1-8 entsprechende Anzahl von Stegen 1.2-8.2 begrenzt, die Bestandteil des Stators 10 sind und deren Schmalseiten jeweils einen bestimmten Abstand a zu Schmalseiten der benachbarten Stege aufweisen. Die Statorschneidelementträger 1.1-8.1 sind an den Stegen 1.2-8.2 befestigt. Die Art dieser Befestigung und dieser Träger wird später noch näher erläutert.

In der Innenkammer des Stators 10 ist ein Rotor 12 mit einem Umfang 13 exzentrisch angeordnet. Die Achse des Rotors 12 ist mit 14 bezeichnet. Der Umfang 13 ist dabei wesentlich kleiner als der Statorinnenumfang 9. Auf dem Rotor 12 ist ein Rotorschneidelementträger 15 angeordnet, an dem ein mit den Statorschneidelementen 1-8 zusammenwirkendes Rotorschneidelement 16 befestigt ist, das auf dem Umfang 13 liegt. Der Rotor 12 rollt mit seinem Umfang 13 auf dem Innenumfang 9 des Stators 10 ab. Dabei wird die Rotorachse 14 auf einer Kreisbahn 17 um die Statorachse 11 geführt. Wie die Führung des Rotors 12 erfolgt, ist nicht näher dargestellt worden. Beispielsweise kann die Führung mittels eines in der Statorachse 11 angetriebenen Hebels erfolgen, an dem der Rotor 12 drehbar befestigt ist, während eine Außenverzahnung des Rotors und eine Innenverzahnung des Stators den Rotor 12 mit dem Stator 10 in Eingriff bringt.

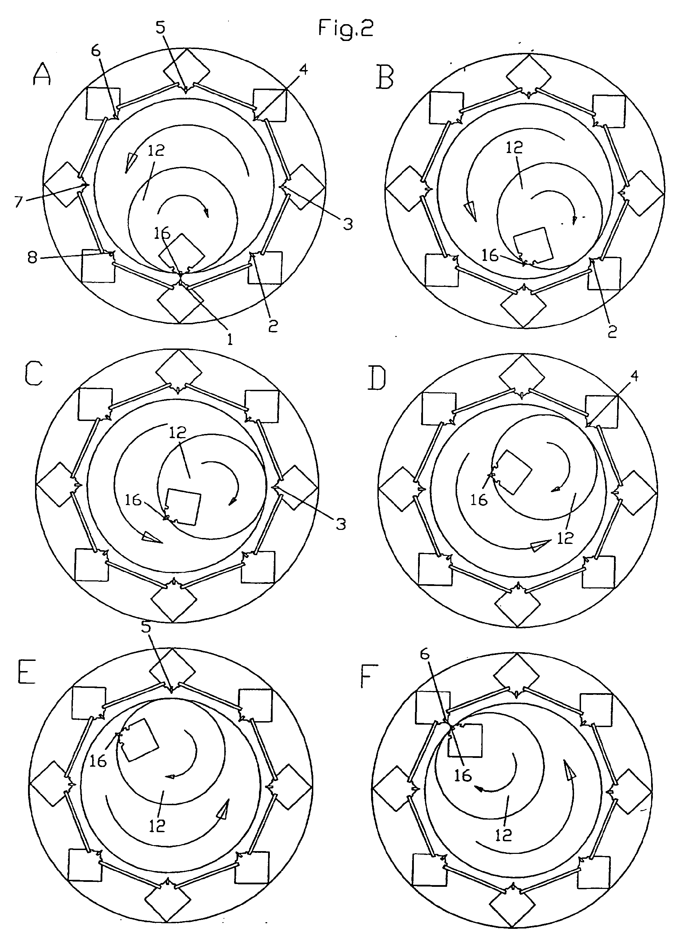

In Fig. 1 ist das Verhältnis des Statorinnenumfangs 9 zum Rotorumfang 13 derart gewählt, daß das Rotorschneidelement 16 je Rotorumlauf mit einem der auf das nächste Statorschneidelement 2 gegenüberliegende Statorschneidelement zusammenwirkt, wobei alle Statorschneidelemente 1-8 in einer bestimmten Reihenfolge beteiligt werden. Wie aus den Figuren 2A-2F zu erkennen ist, rollt der Rotor 12 an den Statorschneidelementen 2-5 vorbei, ehe das Rotorschneidelement 16 nach einem Rotorumlauf auf das Statorschneidelement 6 trifft. Nach dem nächsten Rotorumlauf wird das Rotorschneidelement 16 auf das Statorschneidelement 3 treffen usw., so daß sich die bestimmte Reihenfolge zu 1, 6, 3, 8, 5, 2, 7, 4 ergibt, wonach dann wieder die Ausgangsstellung der Fig. 2A erreicht wird.

In Fig. 3 ist der Weg des Rotorschneidelements 16 und des Rotorschneidelementträgers 15 in den für einen Rotorumlauf geltenden Phasen der Fig. 2 dargestellt, wobei der Rotor selbst wegen der besseren Übersicht fortgelassen worden ist. Das Rotorschneidelement 16 läuft demgemäß im wesentlichen durch die Mitte der Statorinnenkammer und zerbricht im Bereich X ein Mahlgutteil 18 in Stücke, ehe es Stücke des Mahlguts im Bereich Y schneidet. Im Bereich X findet somit eine Grobzerkleinerung statt, während im Bereich Y eine Feinzerkleinerung erfolgt. Letzteres geschieht ohne Erzeugung von wesentlichen Staubanteilen.

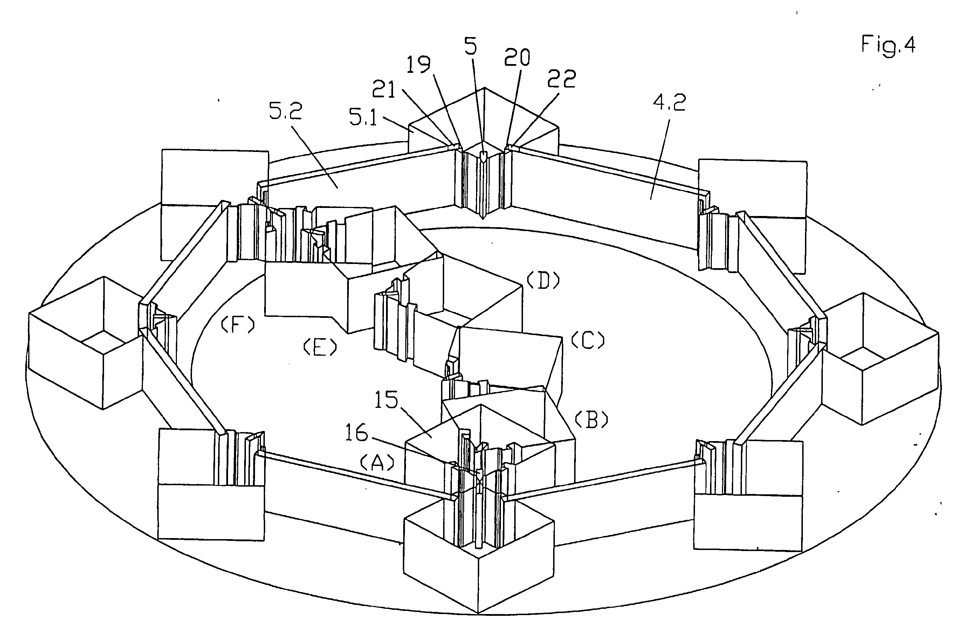

In Fig. 4 ist eine perspektivische Ansicht der Schneidmühle der Fig. 1 dargestellt, wobei die Fig. 4 die in den Figuren 2, 3 dargestellten Phasen A-F ebenfalls wiedergibt. Da der Aufbau der Statorschneidelementträger 1.1-8.1 und der Statorschneidelemente 1-8 gleich ist und die Befestigung dieser Statorschneidelementträger an den Stegen 1.2-8.2 immer die gleiche ist, genügt eine exemplarische Beschreibung eines Statorschneidelemtträgers, hier des Trägers 5.1, und dessen Befestigung am zugehörigen Stegpaar, hier der Stege 4.2 und 5.2.

Der Statorschneidelementträger 5.1 besteht aus einem viereckigen Rahmen. An einer Ecke des Rahmens ist das Statorschneidelement 5 befestigt, das eine gerade, vertikale Schneide aufweist. Zu beiden Seiten und in der Nähe des Statorschneidelements 5 weist der Statorschneidelementträger 5.1 zwei vertikale Taschen 19, 20 auf, in die Enden 21, 22 der Stege 4.2 und 5.2 aufgenommen sind. Zum Auswechseln des Statorschneidelementträgers 5.2 wird dieses einfach nach oben abgezogen, und ein neuer Träger wird von oben auf die Stegenden 21, 22 geschoben. Aus der Fig. 4 ist auch ersichtlich, daß ein Träger 15 für das Rotorschneidelement 16 vorgesehen ist, der wie der Träger 5.1 des Statorschneidelements 5 ausgebildet ist.

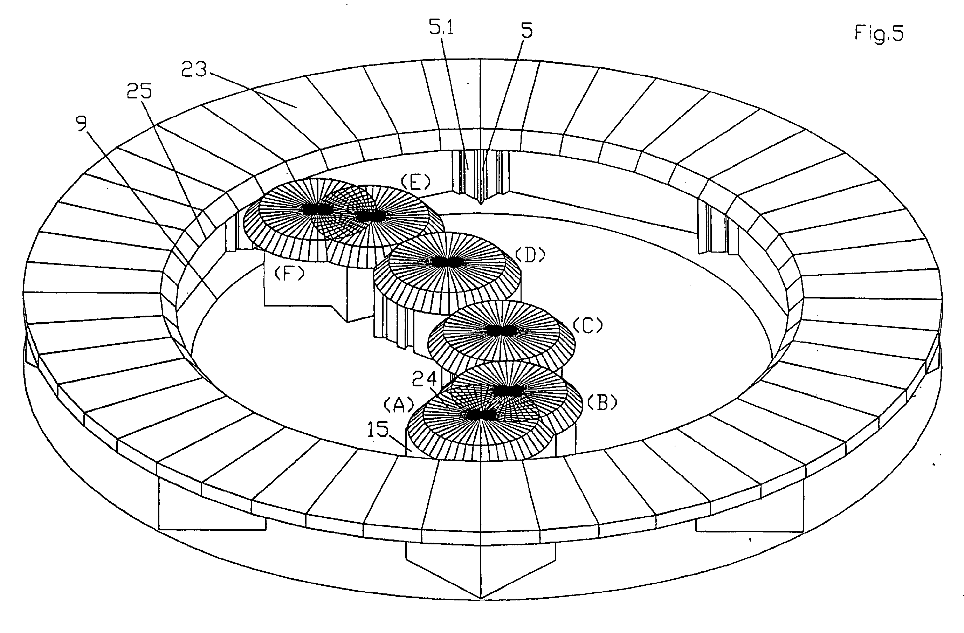

Bei der der Fig. 4 ähnlichen Darstellung in Fig. 5 ist zusätzlich eine horizontale Schneidvorrichtung vorgesehen, die aus einem Schneidring 23 und einer Horizontalrotorschneide 24 gebildet ist. Der Schneidring 23 hat einen Innenumfang 25, der im wesentlichen dem Statorinnenumfang 9 entspricht, ist oberhalb der Statorschneidelemente 1-8 angeordnet und deckt die Statorschneidelementträger 1.2-8.2 ab. Die Horizontalrotorschneide 24 ist scheibenförmig ausgebildet, deckt den Rotorschneidelementträger 15 ab und wirkt mit dem Schneidring 23 zusammen, wie aus Fig. 5 hervorgeht. Mittels dieser zusätzlichen Schneidvorrichtung lassen sich insbesondere lange Mahlgutteile kappen.

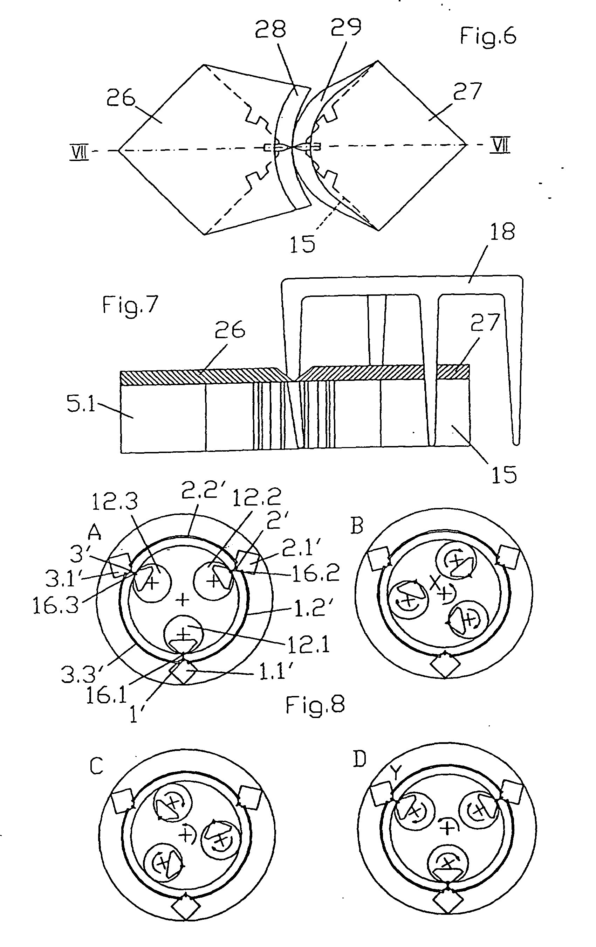

Eine weitere Ausführung der zusätzlichen, horizontalen Schneidvorrichtung ist in Fig. 6 dargestellt. Dort besteht diese Schneidvorrichtung aus Platten, wie die Platte 26, die jeweils die Statorschneidelementträger 1.1-8.1 abdecken, und einer Platte 27, die den Rotorschneidelementträger 15 abdeckt. Die Platten 26, 27 sind mit sichelförmigen Schneiden 28, 29 versehen, die komplementär zueinander ausgebildet sind. In Fig. 7 ist die Wirkung dieser zusätzlichen Schneidvorrichtung gezeigt. Ein langes Bein des Mahlgutteils 18 wird gekappt, worauf das abgekappte Mahlgutteil mit den vertikalen Schneidelementen geschnitten werden kann.

Die in den Figuren 8A-8D gezeigte, weitere Ausführung der Schneidmühle weist einen Stator wie in Fig. 1 auf, jedoch sind zwischen gebogenen Stegen 1.2'-3.2' nur drei Statorschneidelemente 1 '-3' gleichmäßig verteilt vorgesehen, die an Statorschneidelementträgern 1.1'-3.1' befestigt sind. Statt nur eines Rotors sind drei Rotoren 12.1-12.3 vorgesehen, die Rotorschneidelemente 16.1-16.3 tragen. Der Umfang jedes Rotors 12.1-12.3 ist bedeutend kleiner als der des Rotors 12 und hinsichtlich des Statorinnenumfangs derart gewählt, daß das Rotorschneidelement 16.1-16.3 jedes Rotors 12.1-12.3 je Rotorumlauf mit dem nächsten Statorschneidelement 2', 3', 1' zusammenwirkt, wie es aus den Figuren 8B-8D hervorgeht. Auch mit dieser einfachen Ausführung der Schneidmühle wird eine staubarme Mahlgutgrobzerkleinerung im Bereich X (Fig. 8B) und Mahlgutfeinzerkleinerung im Bereich Y (Fig. 8D) erreicht. Um eine Staubbildung zu minimieren, ist es zweckmäßig, wenn der Schneidraum z. B. mittels Heizkörper erwärmt wird.

## Patentansprüche

1. Schneidmühle zum Zerkleinern von Kunststoffteilen, insb. Angüssen von Spritzgussteilen, mit einem Stator, an dessen Innenumfang Statorschneidelemente gleichmäßig verteilt angeordnet sind, und einem im Stator umlaufenden Rotor, auf dessen Umfang mindestens ein Rotorschneidelement angeordnet ist, wobei die Statorschneidelemente mit dem Rotorschneidelement zusammenwirken,
wobei mindestens ein Rotor (12) im Stator (10) exzentrisch angeordnet ist, einen wesentlich geringeren Umfang (13) als der Statorinnenumfang (9) aufweist und sich mit seiner Achse (14) auf einer Kreisbahn (17) um die Statorachse (11) bewegt **dadurch gekennzeichnet, dass**
die Anzahl der Statorschneidelemente (1-8) und das Verhältnis des Statorinnenumfangs (9) zum Rotorumfang (13) derart gewählt sind, dass das Rotorschneidelement (16) je Rotorumlauf mit einem (5) der auf das nächste Statorschneidelement (2) gegenüberliegende Statorschneidelement (3-8) zusammenwirkt, wobei alle Statorschneidelemente (1-8) in einer bestimmten Reihenfolge beteiligt werden.

2. Schneidmühle nach Anspruch 1,
**dadurch gekennzeichnet,**
**daß** der Rotorumfang (13) am Statorinnenumfang (9) abrollt.

3. Schneidmühle nach Anspruch 2,
**dadurch gekennzeichnet,**
**daß** der Rotor (12) mit einer Außenverzahnung und der Stator (10) mit einer Innenverzahnung versehen ist.

4. Schneidmühle nach Anspruch 3,
**dadurch gekennzeichnet,**
**daß** die Anzahl der Statorschneidelemente (1-8) acht beträgt und das Verhältnis des Statorinnenumfangs (9) zum Rotorumfang (13) derart gewählt ist, daß die Reihenfolge 1, 6, 3, 8, 5, 2, 7, 4 lautet.

5. Schneidmühle nach einem der Ansprüche 1 bis 3,
**dadurch gekennzeichnet,**
**daß** drei Statorschneidelemente (1 '-3') und drei Rotoren (12.1-12.3) vorgesehen sind.

6. Schneidmühle nach Anspruch 5,
**dadurch gekennzeichnet,**
**daß** das Verhältnis des Statorinnenumfangs zum Rotorumfang derart gewählt ist, daß das Rotorschneidelement (16.1-16.3) jedes Rotors (12.1-12.3) je Rotorumlauf mit dem nächsten Statorschneidelement (2', 3', 1 ') zusammenwirkt.

7. Schneidmühle nach einem der Ansprüche 1 bis 6, die eine Betriebslage mit vertikaler Statorachse aufweist und bei der die Kunststoffteile axial von oben zugeführt werden,
**dadurch gekennzeichnet,**
**daß** der Stator (10) eine Innenkammer aufweist, die durch eine der Anzahl der Statorschneidelemente (1-8) entsprechende Anzahl von Stegen (1.2-8.2) begrenzt ist, deren Schmalseiten jeweils einen bestimmten Abstand (a) zu Schmalseiten der benachbarten Stege aufweisen, und daß jedes Statorschneidelement an einem ihm zugeordneten, rahmenförmigen Statorschneidelementträger (z.B. 5.1) befestigt ist, der zwei zu beiden Seiten des Statorschneidelements angeordnete Taschen (19, 20) zur Aufnahme der Stegenden (21, 22) zweier benachbarter Stege (4.1 und 5.1) aufweist.

8. Schneidmühle nach Anspruch 7,
**dadurch gekennzeichnet,**
**daß** der Schneidelementträger (z.B. 5.1) viereckig ausgebildet ist und an einer Ecke das Statorschneidelement (5) aufweist und daß die Taschen (19, 20) in der Nähe des Statorschneidelements (5) angeordnet sind.

9. Schneidmühle nach Anspruch 7 oder 8,
**dadurch gekennzeichnet,**
**daß** oberhalb der Statorschneidelemente (1-8) ein horizontaler Schneidring (23) angeordnet ist, dessen Innenumfang (25) im wesentlichen dem Statorinnenumfang (9) entspricht, und daß auf dem Rotor (12) eine Horizontalrotorschneide (24) angeordnet ist, die mit dem Schneidring (23) zusammenwirkt.

10. Schneidmühle nach Anspruch 9,
**dadurch gekennzeichnet,**
**daß** die Horizontalrotorschneide (24) scheibenförmig ausgebildet ist.

11. Schneidmühle nach einem der Ansprüche 7 bis 10,
**dadurch gekennzeichnet,**
**daß** ein Träger (15) für das Rotorschneidelement (16) vorgesehen ist, der wie der Träger (5.1) des Statorschneidelements (5) ausgebildet ist.

12. Schneidmühle nach einem der Ansprüche 1 bis 11,
**dadurch gekennzeichnet,**
**daß** Mittel zum Erwärmung des Schneidraumes vorgesehen sind.

## Claims

1. Cutting mill for cutting up plastics material parts, more especially sprue of injection moulded parts, the said cutting mill including a stator, on the inside circumference of which stator cutting elements are distributed in a uniform manner, and a rotor that circulates in the said stator, at least one rotor cutting element being disposed on the circumference of the said rotor, wherein the stator cutting elements interact with the rotor cutting elements, wherein at least one rotor (12) is disposed eccentrically in the stator (10), has a circumference (13) that is substantially smaller than the stator inside circumference (9) and is moved with its axis (14) on a circular path (17) about the stator axis (11), **characterised in that** the number of stator cutting elements (1 - 8) and the ratio of the stator inside circumference (9) to the rotor circumference (13) is selected in such a manner that each time the rotor rotates, the rotor cutting element (16) interacts with a stator cutting element (3 - 8) situated opposite the next stator cutting element (2), wherein all the stator cutting elements (1 - 8) take part in a specific sequence.

2. Cutting mill according to claim 1, **characterised in that** the rotor circumference (13) rolls on the inside circumference (9) of the stator.

3. Cutting mill according to claim 2, **characterised in that** the rotor (12) is provided with external teeth and the stator (10) is provided with internal teeth.

4. Cutting mill according to claim 3, **characterised in that** the number of stator cutting elements (1 - 8) is eight and the ratio of the stator inside circumference (9) to the rotor circumference (13) is selected in such a manner that the sequence is 1, 6, 3, 8, 5, 2, 7, 4.

5. Cutting mill according to one of claims 1 to 3, **characterised in that** three stator cutting elements (1' - 3') and three rotors (12.1 - 12. 3) are provided.

6. Cutting mill according to claim 5, **characterised in that** the ratio of the stator inside circumference to the rotor circumference is selected in such a manner that the rotor cutting element (16.1 - 16.3) of each rotor (12.1 - 12. 3) interacts with the next stator cutting element (2', 3', 1') each time the rotor rotates.

7. Cutting mill according to one of claims 1 to 6, an operating position of the said cutting mill being with vertical stator axis and the plastics material parts being supplied in an axial manner from above, **characterised in that** the stator (10) includes an inside chamber, which is defined by a number of webs (1.2 - 8.2) that corresponds to the number of stator cutting elements (1 - 8), the narrow sides of each of the said webs being at a certain spacing (a) from the narrow sides of the adjacent webs, and **in that** each stator cutting element is secured to a frame-shaped stator cutting element support (e.g. 5.1) that is associated therewith and includes two pockets (19, 20) that are disposed on both sides of the stator cutting element for the accommodation of the web ends (21, 22) of two adjacent webs (41. and 5.1).

8. Cutting mill according to claim 7, **characterised in that** the cutting element support (e.g. 5.1) is four-cornered and includes the stator cutting element (5) at one corner and **in that** the pockets (19, 20) are disposed in the vicinity of the stator cutting element (5).

9. Cutting mill according to claim 7 or 8, **characterised in that** above the stator cutting elements (1 - 8) there is disposed a horizontal cutting ring (23), the inside circumference (25) of the said cutting ring corresponding substantially to the stator inside circumference (9), and **in that** a horizontal rotor blade (24) is disposed on the rotor (12), the said blade interacting with the cutting ring (23).

10. Cutting mill according to claim 9, **characterised in that** the horizontal rotor blade (24) is disc-shaped.

11. Cutting mill according to one of claims 7 to 10, **characterised in that** there is provided a support (15) for the rotor cutting element (16), the said support (15) being like the support (5.1) of the stator cutting element (5).

12. Cutting mill according to one of claims 1 to 11, **characterised in that** means are provided for heating the cutting area.

## Revendications

1. Broyeur déchiqueteur pour fragmenter des pièces en matière plastique, notamment des carottes de pièces moulées par injection, comprenant un stator sur le pourtour intérieur duquel sont répartis uniformément des éléments statoriques de déchiquetage et un rotor qui tourne dans le stator et sur la périphérie duquel est monté au moins un élément rotorique de déchiquetage, les éléments statoriques de déchiquetage coopérant avec l'élément rotorique de déchiquetage, dans lequel au moins un rotor (12) est monté de manière excentrée dans le stator (10), a une périphérie (13) sensiblement plus petite que la périphérie (9) intérieure du stator et se déplace par son axe (14) sur une trajectoire (17) circulaire autour de l'axe (11) du stator,
**caractérisé en ce que**
le nombre des éléments (1 à 8) statoriques de déchiquetage et le rapport de la périphérie (9) intérieure du stator à la périphérie (13) du rotor sont choisis de façon à ce que l'élément (16) rotorique de déchiquetage coopère à chaque tour du rotor avec l'un (5) des éléments (3 à 8) statoriques de déchiquetage opposés à l'élément (2) statorique de déchiquetage immédiatement suivant, tous les éléments (1 à 8) statoriques de déchiquetage faisant partie d'une succession déterminée.

2. Broyeur déchiqueteur suivant la revendication 1,
**caractérisé en ce que**
la périphérie (13) du rotor roule sur la périphérie (9) intérieure du stator.

3. Broyeur déchiqueteur suivant la revendication 2,
**caractérisé en ce que**
le rotor (12) est muni d'une denture extérieure et le stator (10) d'une denture intérieure.

4. Broyeur déchiqueteur suivant la revendication 3,
**caractérisé en ce que**
le nombre des éléments (1 à 8) de déchiquetage est de huit et le rapport de la périphérie (9) intérieure du stator à la périphérie (13) du rotor est choisi de façon à ce que la succession soit de 1, 6, 3, 8, 5, 2, 7, 4.

5. Broyeur déchiqueteur suivant l'une des revendications 1 à 3,
**caractérisé en ce qu'**il est prévu trois éléments (1' à 3') statoriques de déchiquetage et trois rotors (12.1 à 12.3).

6. Broyeur déchiqueteur suivant la revendication 5,
**caractérisé en ce que**
le rapport de la périphérie intérieure du stator à la périphérie de rotor est choisi de façon à ce que l'élément (16.1 à 16.3) rotorique de déchiquetage de chaque rotor (12.1 à 12.3) coopère à chaque tour du rotor avec l'élément (2', 3', 1') statorique de déchiquetage immédiatement suivant.

7. Broyeur déchiqueteur suivant l'une des revendications 1 à 6, qui a une position de fonctionnement ayant un axe de stator vertical et dans lequel les pièces en matières plastiques sont apportés axialement par le haut,
**caractérisé**
**en ce que** le stator (10) a une chambre intérieure qui est délimitée par un nombre de barrettes (1.2 à 8.2) correspondant au nombre des éléments (1 à 8) statoriques de déchiquetage et dont les petits côtés sont respectivement à une distance (a) déterminée des petits côtés des barrettes voisines et en ce chaque élément statorique de déchiquetage est fixé à un support (par exemple : 5.1) d'élément statorique de déchiquetage en forme de cadre qui lui est associé et qui a deux poches (19, 20) disposées des deux côtés de l'élément statorique de déchiquetage pour la réception des extrémités (21, 22) de deux barrettes (4.1 et 5.1) voisines.

8. Broyeur déchiqueteur suivant la revendication 7,
**caractérisé en ce que**
le support (par exemple 5.1 d'élément de déchiquetage est polygonal et a, à un sommet, l'élément (5) statorique de déchiquetage et **en ce que** les poches (19, 20) sont disposés à proximité de l'élément (5) statorique de déchiquetage.

9. Broyeur déchiqueteur suivant la revendication 7 ou 8,
**caractérisé en ce qu'**au dessus des éléments (1 à 8) statorique de déchiquetage est disposé un anneau (23) horizontal de déchiquetage, dont la périphérie (25) intérieure correspond sensiblement à la périphérie (9) intérieure du stator et **en ce qu'**il est monté sur le stator (12) un déchiqueteur (24) rotorique horizontal qui coopère avec l'anneau (23) de déchiquetage.

10. Broyeur déchiqueteur suivant la revendication 9,
**caractérisé en ce que**
le déchiqueteur (24) rotorique horizontal est en forme de disque.

11. Broyeur déchiqueteur suivant l'une des revendications 7 à 10,
**caractérisé en ce qu'**il est prévu un support (15) pour l'élément (16) rotorique de déchiquetage, qui est constitué comme le support (15.1) de l'élément (5) statorique de déchiquetage.

12. Broyeur déchiqueteur suivant l'une des revendications 1 à 11,
**caractérisé en ce qu'**il est prévu des moyens pour réchauffer l'espace de déchiquetage.
